Europäisches Patentamt

European Patent Office

Office européen des brevets

(19)

(11) Publication number: **0 037 722**
**A1**

(12)

# EUROPEAN PATENT APPLICATION

(21) Application number: **81301458.6**

(22) Date of filing: **03.04.81**

(51) Int. Cl.³: **G 03 B 41/16**

(30) Priority: **08.04.80 US 138400**

(43) Date of publication of application:
**14.10.81 Bulletin 81/41**

(84) Designated Contracting States:
**BE DE FR GB NL SE**

(71) Applicant: **TECHNICARE CORPORATION**
**29100 Aurora Road**
**Solon, Ohio 44139(US)**

(72) Inventor: **McCarthy, Robert Henry**
**18035 Stoney Brook Court**
**Chagrin Falls Ohio 44022(US)**

(74) Representative: **Colgan, Stephen James et al,**
**CARPMAELS & RANSFORD 43 Bloomsbury Square**
**London, W.C.1A, 2RA.(GB)**

(54) **Dynamic image enhancement method and apparatus therefor.**

(57) A method of visualizing small, low contrast, objects using short exposure times for the study of dynamic processes. Several sequential fixed-time frames are added together to form a composite reference image which is stored in digital memory. A patient is injected with a relatively small amount of X-ray opaque dye to provide a contrast difference. After the dye takes effect, a post contrast composite image is acquired by adding together several sequential fixed-time frames. The post contrast composite is stored in a second digital memory and substracted from the composite reference resulting in a difference image which is enhanced by a mapping memory. An apparatus for performing dynamic image enhancement is also disclosed.

./...

FIG.1.

## DYNAMIC IMAGE ENHANCEMENT METHOD AND APPARATUS THEREFOR

### Technical Field

This invention relates to dynamic image enhancement of low contrast objects utilizing venous injection of a relatively small amount of an X-ray opaque dye. A reference digitized composite image is built up until a satisfactory signal to noise ratio is achieved. A corresponding post contrast image is integrated and digitally subtracted from the composite reference. The result is a difference image which may be further processed for improved contrast.

### Background Art

For clinical evaluation there is a need to visualize small, low contrast objects to study dynamic anatomic processes. Two-dimensional projected images, such as conventional X-rays, do not provide the required contrast to detect the density differences between, for example, the cardiovascular system and its blood content. For cardiac studies the conventional technique to detect such differences is angiocardiography wherein a contrast material is introduced through the arteries directly to the region of interest by means of a catheter. Unfortunately, conventional angiocardiography is accompanied by significant risk to the patient. For example, if a large build up of plaque is inadvertently removed from one of the carotid arteries during catheterization, the result may be fatal to the patient. The alternative, is to inject a contrast dye into a remote vein of the patient; however, the dye becomes diluted below the requisite concentration by the time it reaches the arteries of interest, typically the carotid arteries. The simple expedient of increasing the quantity of dye injected is impractical because of potential toxic side effects.

Thus, the problem is to obtain clinically relevant information without catheterization. Significant improvements in this area have been made possible recently by the use of advanced electronic techniques including large scale digital computers.

One example of an image storage and display system for use with X-ray apparatus is disclosed in U. S. Patent No. 3,582,651 to Siedband. According to this technique, a radiation image is scanned and recorded on a recording medium. The previously recorded image is compared with a synchronized real time image. The recorded image is inverted and algebraically added to the real time image to cancel common portions.

Another technique for improving the visibility of a contrast medium exploits the discontinuity, known as the K absorption edge, in X-ray spectra (X-ray absorption and attenuation coefficients compared to increasing X-ray energy levels) for various contrast materials. Thus, differential X-ray images can be produced by the use of X-ray filters which effectively alter the X-ray energy level to thereby obtain images at levels adjacent to and at either side of the K edge. One example of this technique is disclosed in U. S. Patent No. 3,974,386 to Mistretta et al. According to the '386 patent, three X-ray images having three different energy levels are generated. The first energy level is below the K edge energy, the second is above and the third is higher than the second. The second image is subtracted from the average of the other two to produce a differential X-ray image.

Frost et al. have reported a system for acquisition of superior quality digitized video images in the SPIE, Vol. 127, Optical Instrumentation in Medicine VI (1977) article entitled "A Digital Video Acquisition System For Extraction of Subvisual Information in Diagnostic Medical Imaging" at pp. 208-215. The Frost et al. system utilizes an X-ray image intensifier coupled to a high-resolution, low-noise video system. The output video signal is fed to a digital memory having 512 x 512 pixels and 8-bit accuracy. The contrast available is a function of the signal-to-noise ratios achieved which are, in turn, limited by the X-ray tube and intensifier flux levels.

It has been shown that to detect an object, the signal-to-noise ratio must be greater than five. It is also well known that the amount of noise in an X-ray image is proportional to the number of X-ray photons detected (neglecting scatter). For example, if the X-ray flux (representing the number of photons per unit time) emitted by an X-ray tube were doubled, the signal would be increased by a factor of 2 while the noise would be increased by the square root of 2. Thus, doubling the X-ray flux increases the signal to noise ratio by a factor of approximately 1.4, the square root of 2. In principle, any desired contrast can be detected, by sufficiently increasin - the - X-ray flux. In practice, however, one quickly reaches a limit in available X-ray flux as determined by the state of the art in X-ray tubes and X-ray generator design.

To overcome the limitations inherent in the physics of X-ray tubes, applicant achieves the detection of low contrast objects by adding together several sequential fixed-time frames rather than further increasing X-ray flux. This technique permits the detection of low contrast objects with state of the art X-ray tubes.

A research team from the University of Kiel, Germany has reported on a new technique of "computerized video-angiocardiography" beginning at p. 17 of the book Non-Invasive Cardiovascular Measurements, September, 1978. The report entitled "Computer Quantitation of Angiocardiographic Images" suggests summing up instantaneous contrast angiocardiographic pictures and subtracting the corresponding non-specific background obtained from x-ray pictures taken in real time prior to or following contrast injection.

Disclosure of the Invention

Applicant has discovered a system of digital subtraction radiography for image enhancement which can replace conventional angiocardiography, an "invasive" technique. The inventive system permits observation comparable to conventional angiocardiography without the invasive trauma of catheterization of the subject.

In a preferred embodiment, the method of digital image enhancement of an object for producing a differential image comprises generating a digitized composite mask image of the subject, storing the composite mask image in a first memory, introducing a contrast agent into the object, generating a digitized composite post contrast image of the object, storing the composite post contrast image in a second memory, and subtracting the stored digitized post composite contrast image from the stored digitized composite mask image to produce a differential image.

The composite mask image in a preferred embodiment is generated by integrating a plurality of images of the object acquired before the contrast agent takes effect. Similarly, the post contrast image is generated by integrating a plurality of images acquired after the contrast agent takes effect. By adding several sequential frames together to form composite pre and post contrast images, the sensitivity to motion of these radiation images is significantly reduced.

Applicant has further invented an apparatus for performing dynamic image enhancement of a portion of a subject into which a contrast agent is injected during a diagnostic procedure. In a preferred embodiment, the apparatus comprises video input means for successively inputting digitized frames of X-ray images of the subject, first storage means communicatively connected to the video input for storing a first digitized reference X-ray image of the subject, first means for integrating the first digitized reference image with subsequently input reference images to obtain a composite reference image in the first storage means, second storage means communicatively connected to the video input means for storing a first digitized post contrast X-ray image of the subject, second means for integrating the first digitized post contrast image with subsequently input post contrast images to obtain a composite post contrast image in the second storage means, and means communicatively connecting at least one of the first storage means with the second integrating means and the second storage means with the first integrating means for subtractively combining the composite post contrast image with the composite reference image to produce a differential image.

Brief Description of Drawings
Fig. 1 is a schematic block diagram showing a data path for digital image enhancement according to the present invention utilizing two dual input arithmetic and logic units.

Fig. 2 is a schematic block diagram of an alternate data path for digital image enhancement according to the present invention utilizing three triple input arithmetic and logic units.

## Detailed Description of the Invention

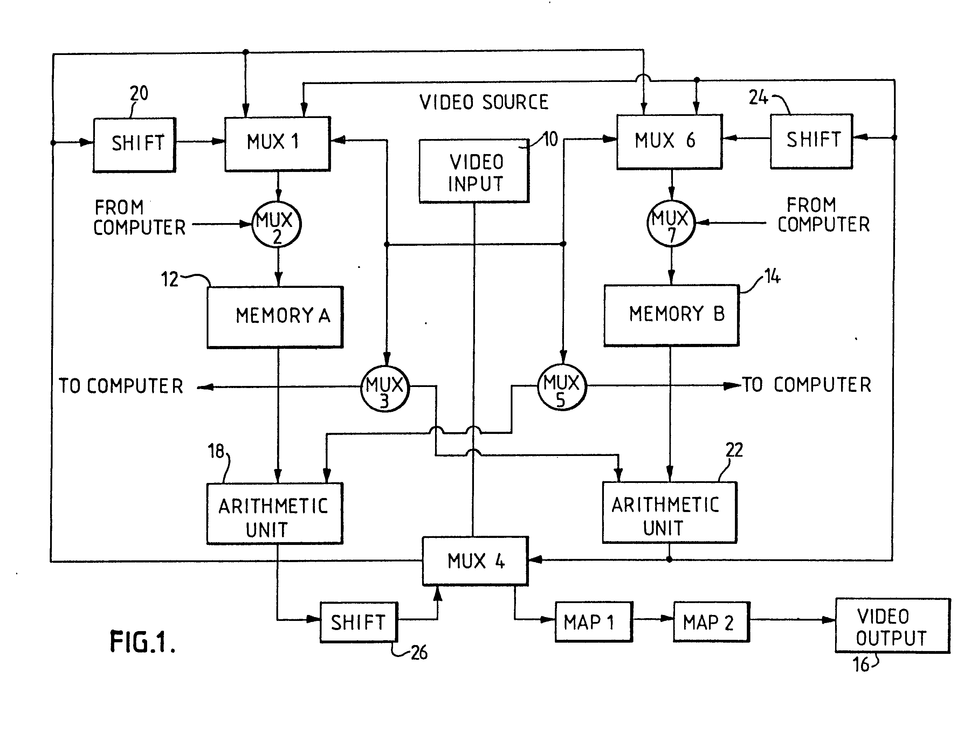

Referring to Fig. 1, there is designated a video input 10 which is an analog-to-digital converter operatively connected to any suitable external video source (not shown) such as a television camera or charge coupled device (CCD) array. A conventional X-ray image of a portion of a subject being diagnosed is input a frame at a time at video input 10. Each frame of video input is a digitized array of 256 x 256 pixels with 8 bits of resolution for each address.

The information from video input 10 is routed to Memory 12 via data selector or multiplexer 1 and multiplexer 2 and to Memory 14 via multiplexer 6 and multiplexer 7 or to video output 16. Typically, a reference or mask image is loaded into Memory 12 via multiplexer 1 and multiplexer 2. To generate a composite mask image, a plurality of frames representing pre contrast images are serially input at a rate of 60 frames per second at video input 10. A first frame is input into Memory 12. Thereafter, a second frame is input into arithmetic and logic unit (ALU) 18 via multiplexer 5 wherein the two digitized frames are additively combined. The data in ALU 18 must be averaged or divided by two since they represent two frames. The averaging is accomplished by means of a shift 20 which performs a halving or "divide by two" operation by "shifting" the binary data one place to the right. The averaged digitized image is routed to Memory 12 via multiplexer 1 and multiplexer 2. The process of averaging or integrating is continued with subsequent frames being input to ALU 18 until a statistically accurate composite mask is generated. In other words, until the desired signal to noise ratio is achieved.

A relatively small amount of X-ray opaque contrast agent is injected into a vein of the subject. Since it takes about 10-15 seconds for the contrast agent to take effect, the reference images may be input even after the contrast agent is injected into the subject. Of course, the post contrast images are not be obtained until after the contrast agent takes effect.

After the composite reference image is generated and stored in Memory 12 and the requisite time has passed for the contrast agent to take effect, a post contrast image is routed to Memory 14 from video input 10 via multiplexer 6 and multiplexer 7. The technique for generating a composite post contrast image is comparable to that described above for generating a composite mask image. For example, a first digitized post contrast image is fed into Memory 14 and a second digitized image is input and added thereto by means of ALU 22. The added or integrated data is averaged by routing the information through shift 24. From there, the averaged image is routed via multiplexer 6 and multiplexer 7 into Memory 14. This process continues with a plurality of subsequent frames being input sequentially until a statistically accurate composite post contrast image is obtained. As shown in Fig. 1, the data path is symmetric with respect to the two memories 12 and 14.

After a composite post contrast image is integrated and stored in Memory 14, it is substracted from the composite mask image stored in Memory 12. Since both images are digitized and stored in a 256 x 256 byte array, subtraction is performed at each memory address. The subtraction operation can be performed in either ALU 18 or ALU 22. If

ALU 18 is used, then the composite mask image in Memory 12 is routed thereto directly while the composite post contrast image stored in Memory 14 is routed to ALU 18 via multiplexer 5. The difference image formed in ALU 18 is routed to video output 16 via multiplexer 4. For added flexibility, an additional shift 26 is provided at the output of ALU 18 if it is desired to average the data output from ALU 18 before it is routed to video output 16 via multiplexer 4. Conversely, ALU 22 may perform the subtraction operation by routing the mask image being stored in Memory 12 via multiplexer 3 thereinto and the post contrast image from Memory 14 directly into ALU 22. The difference image formed in ALU 22 is likewise routed to video output 16 via multiplexer 4. For diagnostic purposes, the output of either ALU 18 or ALU 22 can be rerouted and each stored in either Memory 12 or Memory 14.

The difference image from either ALU 18 or ALU 22 is routed through multiplexer 4 to video output 16. Two mapping memories MAP 1 and MAP 2 are provided in this path to perform image enhancement and gray level mapping. MAP 1 is a 256 x 8 bit memory normally used for image enhancement by mapping an 8 bit input code into an 8 bit output code. MAP 2 is also a 256 X 8 bit memory and it is normally used for gray level mapping. MAP 1 takes the data points and provides a histogram or distribution of 256 gray levels. The non-useful information is rejected. The useful information is enhanced into approximately 32 gradations of gray levels for human visualization. MAP 2 provides a calibration function.

All of the multiplexers, as well as the contents of MAP 1 and MAP 2 are controlled by a remote computer.

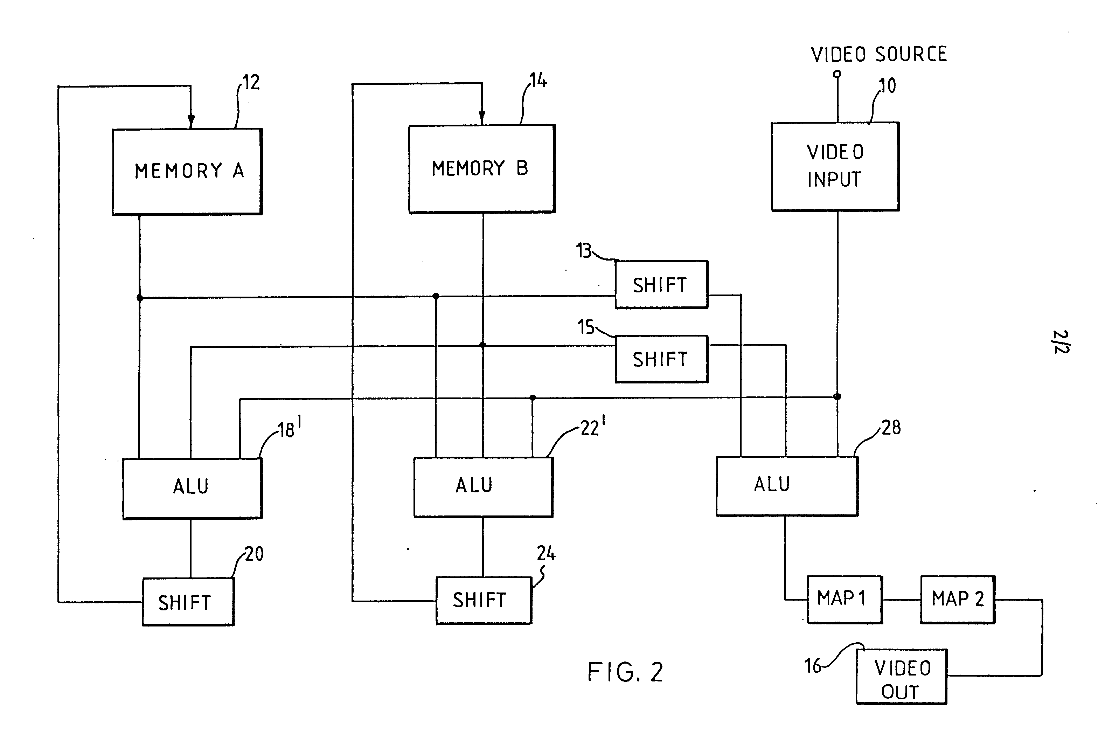

Fig. 2 sets forth an alternate data path utilizing three ALU's. In this system, information from video input 10 is routed to Memory 12 via ALU 18' and shift 20; to Memory 14 via ALU 22' and shift 24; and to ALU 28. For simplicity, ALU 18' and shift 20 integrate a plurality of pre contrast images to form a composite mask which is stored in Memory 12. Similarly, ALU 22' and shift 24 integrate a plurality of post contrast images to form a composite post contrast image which is stored in Memory 14. Both composite images, from Memory 12 and Memory 14 are routed to ALU 28 through shift 13 and shift 15, respectively. ALU 28 then performs a subtraction operation resulting in a difference image.

As in Fig. 1, the difference image is routed to video output 16. Again, two mapping memories, MAP 1 and MAP 2, are provided in this path to perform image enhancement and gray level mapping.

Claims:-

1.  A method of digital image enhancement of an object for producing a differential image comprising:

a) generating a digitized composite mask image of the object;

b) storing said digitized composite mask image in a first digital memory;

c) injecting a relatively small amount of X-ray opaque contrast agent into the object;

d) generating a digitized composite post contrast image of the object;

e) storing said digitized composite post contrast image in a second digital memory; and

f) subtractively combining said stored digitized composite mask image and said stored digitized composite post contrast image to produce a differential image.

2.  A method according to claim 1 wherein generating said composite mask image comprises integrating a plurality of images of the object before the contrast agent takes effect.

3.  A method according to claim 1 or 2 wherein generating said composite post contrast image comprises integrating a plurality of images after the contrast agent takes effect.

4.  A method according to any of claims 1 to 3 further comprising enhancing said differential image.

5.  An apparatus for performing dynamic image enhancement of an object into which a contrast agent is introduced during a diagnostic procedure which comprises:

a) means for storing a digitized reference image of the object in a first memory;

b) means for storing a digitized post contrast image in a second memory;

c) means operatively connected to both of said storing means for digitally subtracting said post contrast image from said reference image to produce a differential image.

6. An apparatus according to claim 5 which further comprises:

a) first means for integrating a plurality of successively input digitized reference images to produce a composite reference image; and

b) second means for integrating a plurality of successively input digitized post contrast images to produce a composite post contrast image.

7. An apparatus according to claim 6 wherein each of said first and second integrating means comprises an ALU.

8. An apparatus for performing dynamic image enhancement of a portion of a subject into which a contrast agent is injected during a diagnostic procedure which comprises:

a) video input means for successively inputting digitized frames of X-ray images of the subject;

b) first storage means communicatively connected to said video input for storing a first digitized reference X-ray image of the subject;

c) first means for integrating said first digitized reference image with subsequently input reference images to obtain a composite reference image in said first storage means;

d) second storage means communicatively connected to said video input means for storing a first digitized post contrast X-ray image of the subject;

e) second means for integrating said first digitized post contrast image with subsequently input post contrast images to obtain a composite post contrast image in said second storage means; and

f) means communicatively connecting at least one of said first storage means with said second integrating means and said second storage means with said first integrating means for substractively combining said composite post contrast image with said composite reference image to produce a differential image.

9. An apparatus according to claim 8 which further comprises mapping means for enhancing said differential image.

10. An apparatus for performing dynamic image enhancement of a portion of a subject into which a contrast agent is injected during a diagnostic procedure which comprises:

a) video input means for successively inputting digitized frames of radiation images of the subject;

b) first storage means communicatively connected to said video input for storing a first digitized reference radiation image of the subject;

c) first means for integrating said first digitized reference image with subsequently input reference images to obtain a composite reference image in said first storage means;

d) second storage means communicatively connected to said video input means for storing a first digitized post contrast radiation image of the subject;

e) second means for integrating said first digitized post contrast images to obtain a composite post contrast image in said second storage means; and

f) means operatively connected to the output of each of said first and second storage means for digitally

-13-

subtracting said composite post contrast image from said
composite reference image to produce a differential image.

FIG.1.

FIG. 2

0037722

European Patent
Office

**EUROPEAN SEARCH REPORT**

Application number

EP 81301458.6

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | GB - A - 1 512 891 (GOODYEAR) + Totality + -- | 1-8 | G 03 B 41/16 |
| | US - A - 3 854 049 (MISTRETTA) + Column 1, lines 42-47; column 4, lines 16-32, 42-45; column 13, claim 1; column 15, claim 21; fig. 1 + -- | 1-6,8, 10 | |
| | US - A - 3 588 502 (GREENFIELD) + Column 4, claim 1, lines 3-9 + -- | 1-3 | TECHNICAL FIELDS SEARCHED (Int. Cl.³) |
| D,A | US - A - 3 582 651 (SHIEDBAND) + Totality + -- | 1,5 | G 03 B 41/00 A 61 B 6/00 H 04 N 1/00 |
| D,A | US - A - 3 974 386 (MISTRETTA) + Abstract; columns 49-56; claims 1-49; fig. 1 + -- | 1,5 | H 04 N 5/00 G 06 F 15/00 H 05 G 1/00 |
| P | DE - A1 - 3 026 897 (PHILIPS) (19-02-1981) + Totality + & BE-A1-884 362 (19-01-1981) & SE-A -80/05 181 (20-01-1981) & FR-A1-2 461 960 (06-02-1981) & NL-A -79/05 611 (21-04-1981) ---- | 1-8,10 | CATEGORY OF CITED DOCUMENTS X: particularly relevant A: technological background O: non-written disclosure P: intermediate document T: theory or principle underlying the invention E: conflicting application D: document cited in the application L: citation for other reasons &: member of the same patent family, corresponding document |

| | | | |
|---|---|---|---|
| X | The present search report has been drawn up for all claims | | |
| Place of search VIENNA | Date of completion of the search 30-06-1981 | Examiner VAKIL | |

EPO Form 1503.1 06.78